Europäisches Patentamt

European Patent Office

Office européen des brevets

(19)

(11) **EP 1 582 858 A1**

(12) **EUROPÄISCHE PATENTANMELDUNG**

(43) Veröffentlichungstag:
05.10.2005 Patentblatt 2005/40

(51) Int Cl.⁷: **G01N 21/64**, G02B 21/00

(21) Anmeldenummer: 04007533.5

(22) Anmeldetag: 29.03.2004

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(71) Anmelder: **MAX-PLANCK-GESELLSCHAFT ZUR FÖRDERUNG DER WISSENSCHAFTEN E.V.**
**80539 München (DE)**

(72) Erfinder: **Hell, Stefan Dr.**
**37073 Göttingen (DE)**

(74) Vertreter: **Rehberg Hüppe + Partner**
**Postfach 31 62**
**37021 Göttingen (DE)**

(54) **Verfahren zur Anregung der Moleküle von einem ersten Zustand in einen zweiten Zustand mit einem optischen Signal**

(57) Bei einem Verfahren zum Überführen einer Probe von einem ersten Zustand in einen zweiten Zustand mit einem optischen Signal, wobei das optische Signal eine räumliche Intensitätsverteilung mit mindestens einer Nullstelle und mit an die Nullstelle angrenzenden Bereichen aufweist, in denen die Intensität des Signals so groß ist, dass eine Sättigung beim Überführen der Probe in den zweiten Zustand erreicht wird, wird die Probe, bevor das optische Signal auf sie gerichtet wird, auf unter 5 °C abgekühlt.

EP 1 582 858 A1

**Beschreibung**

Die Erfindung betrifft ein Verfahren zum Überführen einer Probe von einem ersten Zustand in einen zweiten Zustand mit einem optischen Signal, wobei das Verfahren die Merkmale des Oberbegriffs des Patentanspruchs 1 aufweist.

## STAND DER TECHNIK

Ein Verfahren mit den Merkmalen des Oberbegriffs des Patentanspruchs 1 ist beispielsweise aus der DE 101 54 699 A1 bekannt. Zur fluoreszenzmikroskopischen Untersuchung einer Probe wird diese zunächst mit einem anregenden optischen Signal in einem angeregten energetischen Zustand gebracht. Bei dieser optischen Anregung gilt die übliche Grenze für die räumliche Auflösung bei optischen Verfahren von $\lambda/2n$, wobei $\lambda$ die Wellenlänge des eingesetzten Lichts und n der Brechungsindex der Probe ist. Um diese Grenze zu unterschreiten, wird der optisch angeregte Zustand mit einem abregenden optischen Signal bis auf einen gewünschten Messpunkt, in dem das abregende optische Signal eine Nullstelle aufweist, wieder abgeregt; d.h. mit dem abregenden optischen Signal wird die Probe überall außerhalb des Messpunkts zu stimulierter Emission gezwungen. Die Abmessungen des resultierenden fluoreszierenden Messpunkts, d.h. die räumliche Auflösung der verbleibenden Fluoreszenz, kann deutlich unter die übliche optische Auflösungsgrenze abgesenkt werden, indem das abregende optische Signal außerhalb des gewünschten Messpunkts mit einer solchen Intensität auf die Probe aufgebracht wird, dass eine Sättigung bei der Abregung durch stimulierten Emission erreicht wird. So befindet sich die Probe nur noch in einem sehr eng begrenzten Bereich um die Nullstelle der Intensitätsverteilung des abregenden optischen Signals in dem fluoreszierenden Zustand.

Gemäß der Veröffentlichung Hell, Nature Biotechn., 21, 1347-1355, verhält sich die Größe des fluoreszierenden Messpunkts $\Delta x$ und damit die Auflösung gemäß $\Delta x \approx \lambda/(2n\sqrt{I/I_s})$ wobei $\lambda$ die Wellenlänge, n der Brechungsindex, I die eingestrahlte Intensität und $I_s$ die Sättigungsintensität ist. Die Sättigungsintensität $I_s$ ist die charakteristische Intensität, bei der die Probe durch die Einwirkung des abregenden optischen Signals statistisch gesehen zur Hälfte abgeregt ist. Die Sättigungsintensität $I_s$ nimmt mit dem Wirkungsquerschnitt $\sigma$ der Probe für das abregende optische Signal gemäß $I_s=1/(\sigma\tau)$ umgekehrt proportional ab. Dabei ist $\tau$ die mittlere Lebensdauer mit der die Probe im angeregten Zustand verbleibt, bevor sie spontan in den abgeregten Zustand übergeht. Für die Auflösung gilt demnach: $\Delta x \approx \lambda/(2n\sqrt{I\sigma\tau})$. Somit ist es zur Erzielung hoher Auflösungen vorteilhaft, mit einer möglichst hohen Intensität I des abregenden optischen Signals, mit einem möglichst hohen Wirkungsquerschnitt $\sigma$ und mit einem angeregten Zustand mit möglichst hoher Lebensdauer $\tau$ zu arbeiten.

Bei einer möglichst hohen Intensität I des abregenden optischen Signals, die für die Sättigung notwendig ist, besteht die Gefahr, dass die Probe chemisch verändert wird. Eine solche chemische Veränderung basiert in der Regel auf einer Radikalenbildung durch die hohen Lichtintensitäten, die verschiedene chemische Reaktionen ermöglicht. Insbesondere wenn Sauerstoff und andere reaktive Agenzien in der Probe vorliegen, treten aufgrund des abregenden optischen Signals ungewollte chemische Reaktionen auf, die, wenn sie die fluoreszierenden Farbstoffe in der Probe betreffen, als Ausbleichen der Probe bezeichnet werden. Die zur Sättigung notwendige Intensität des abregenden optischen Signals könnte reduziert werden, wenn sein Wirkungsquerschnitt $\sigma$ erhöht werden könnte.

Es ist aber so, dass häufig bei einer Wellenlänge des abregenden optischen Signals gearbeitet werden muss, bei der $\sigma$ verhältnismäßig klein ist. Der Grund ist, dass bei einer anderen zumeist kürzeren Wellenlänge, bei der der Wirkungsquerschnitt höher wäre, neben der gewollten Abregung auch andere unerwünschte Prozesse ausgelöst würden, die der gewünschten Abregung der Probe zuwider liefen, wie beispielsweise die erneute Anregung der Probe in den angeregten fluoreszierenden Zustand, so dass sich die Gesamteffizienz der gewünschten Abregung verschlechtern würde.

Die Lebensdauer $\tau$ eines bestimmten angeregten fluoreszierenden Zustands ist eine an sich feste Größe.

## AUFGABE DER ERFINDUNG

Der Erfindung liegt die Aufgabe zugrunde, ein Verfahren mit den Merkmalen des Oberbegriffs des Patentanspruchs 1 aufzuzeigen, das grundsätzliche Vorteile in Bezug auf die Auflösung aufweist.

## LÖSUNG

Die Aufgabe der Erfindung wird durch ein Verfahren mit den Merkmalen des Patentanspruchs 1 gelöst. Bevorzugte Ausführungsformen des neuen Verfahrens sind in den Unteransprüchen 2 bis 10 beschrieben.

## BESCHREIBUNG DER ERFINDUNG

Bei dem neuen Verfahren wird die Probe, bevor das optische Signal auf sie gerichtet wird, mindestens auf unter 5 °C abgekühlt. Gegenüber einer Probe auf Raumtemperatur wird bereits durch die Abkühlung auf unter 5 °C eine erhebliche Immobilisierung der einzelnen Bestandteile der Probe erreicht. Konkret sind toxische Agenzien, die durch die hohe Intensität des optischen Signals radikalisiert werden können, in der Probe nicht mehr so mobil, dass sie zu Schäden in größeren räumlichen Bereichen führen können. Die Schäden durch die toxischen Agenzien bleiben vielmehr auch bei hohen Intensitäten des optischen Signals lokal. Das Unterschreiten von 5 °C in der Probe zeigt insbesondere bei wasserhaltigen Proben, d.h. bei den meisten biologischen Proben, bereits einen deutlichen das Ausbleichen unter Einwirkung des optischen Signals reduzierenden Effekt. Unter 5 °C beginnen sich die Dipole der Wassermoleküle zu ordnen. Die Beweglichkeit der Wassermoleküle und der im Wasser gelösten Stoffe geht zunehmend zurück. In der Weise, wie die Neigung der Probe zu chemischen Veränderungen unter Einwirkung des optischen Signals durch die Abkühlung der Probe reduziert wird, kann die Intensität des optischen Signals erhöht werden, um die Ortsauflösung der Bereiche der Probe, die sich noch in dem ersten Zustand befinden, gemäß $\Delta x \approx \lambda/(2n\sqrt{I/I_s})$ durch eine näher an die Nullstellen der Intensitätsverteilung des ersten Signals heranreichende Sättigung der Probe zu erhöhen.

Aus dem Bereich der lichtspektroskopischen Analyse von Substanzen ist es zwar grundsätzlich bekannt, dass das Abkühlen auf tiefe Temperaturen das Ausbleichen unter Einwirkung eines optischen Messstrahls verhindert oder zumindest behindert. Hierbei gibt es aber nicht die Anforderung, dass die Intensitätsverteilung eines optischen Signals oberhalb der Sättigungsintensität der Probe liegen muss, um eine maximale Auflösung zu erreichen. Insoweit gibt es hier keine Korrelation der Ortsauflösung mit der Temperatur, soweit die Ortsauflösung hier überhaupt von Interesse ist.

Bei wasserhaltigen Proben ist es besonders bevorzugt, wenn diese, bevor das optische Signal auf sie gerichtet wird, auf mindestens 0 °C abgekühlt werden. D.h., es ist bevorzugt, wenn die Proben eingefroren werden, idealerweise im so genannten Schockverfahren, bei dem die Probe sehr schnell in eine gekühlte Flüssigkeit getaucht wird, um die Bildung von Eiskristallen zu vermeiden. Einfrieren unter Bildung von amorphem Eis reduziert ganz erheblich die Mobilität reaktiver Bestandteile der Proben und damit den möglichen räumlichen Umfang chemischer Umwandlungen aufgrund des Einwirkens des optischen Signals selbst bei zur Steigerung der Ortsauflösung stark erhöhter Intensität.

Wenn die Probe deutlich unter 0 °C abgekühlt wird, sind hiermit zusätzliche Vorteile verbunden. Die energetische Verteilung der Zustände, in denen die Probe vorliegt, bevor das optische Signal auf sie gerichtet wird, ändert sich deutlich. Thermische Anregungszustände gehen zurück und können ganz verschwinden. Dadurch ist die Probe vor dem Aufbringen des optischen Signals in einem schärfer definierten Zustand. Der Grund für die schlechten Wirkungsquerschnitte der im Stand der Technik mit sättigenden Intensitäten eingesetzten optischen Signale ist häufig der, dass sich die Probe bei Raumtemperatur nicht in einem eindeutigen angeregten oder abgeregten Zustand befindet, sondern ihr Zustände gemäß der Boltzmann-Verteilung thermisch in Unterzustände aufgefächert sind. Daher muss z. B. in der Fluoreszenzmikroskopie bei Raumtemperatur der Fluoreszenz-Farbstoff Pyridin 2 bei ca. 760 nm zur stimulierten Emission abgeregt werden, obwohl das aus der Literatur bekannte Emissionsspektrum mit seinem Maximum bei 670 nm eher eine beste Abregung bei 690-740 nm erwarten lassen würde. Würde man bei Raumtemperatur jedoch in diesem Spektralbereich abregen, so würde man zwar einen hohen Wirkungsquerschnitt für die Abregung vorfinden, den Farbstoff zugleich aber ungewollt wieder anregen, so dass man den hohen Wirkungsquerschnitt für die Abregung nicht nutzen könnte. Die thermische Auffächerung der Zustände lässt eine eindeutige Wirkungsweise des optischen Signals nur in einem sehr engen und vom Wirkungsquerschnitt sehr ungünstigen Spektralbereich zu. Wenn die thermische Anregung der Probe jedoch reduziert wird, geht die thermische Auffächerung der Zustände zurück und das optische Signal kann daher in seiner Wellenlänge selektiver auf einen hohen Wirkungsquerschnitt bei der gewünschten Überführung der Probe von dem ersten in den zweiten Zustand abgestimmt werden. Dies hat schon bei gleich bleibender Intensität des optischen Signals einen direkten positiven Einfluss auf die Auflösung. Bei zusätzlicher Erhöhung der Intensität, die aufgrund der geringeren Neigung der Probe zu chemischen Veränderungen bei tiefen Temperaturen möglich ist, wird die Auflösung noch weiter gesteigert.

Darüber hinaus werden thermisch induzierte Übergänge der Probe, wie z. B. das unerwünschte Löschen eines angeregten ersten Zustands reduziert. Dies bedeutet, dass sich die Lebensdauer $\tau$ des ersten Zustands erhöht, was gemäß der Formel $\Delta x \approx \lambda/(2n\sqrt{I\sigma\tau})$ ebenfalls zu einer höheren Auflösung führt.

Bei einer Abkühlung der Probe auf unter 130 K ist der thermische Einfluss auf die Besetzung der Unterzustände, der durch den Bolzmannfaktor $e^{-\Delta E/kT}$ repräsentiert wird, gegenüber der Raumtemperatur bereits auf etwa ein Zehntel reduziert. Bei einem Fluoreszenzfarbstoff sind es vor allen Dingen Schwingungs- und Rotationszustände, die mit sinkender Temperatur zunehmend unbesetzt bleiben. Daher ergeben sich weitere Reduktionen des thermischen Einflusses bei weiter reduzierter Temperatur der Probe. Eine Temperatur von unter 80 K ist durch Kühlung mit flüssigem Stickstoff erreichbar. Eine Temperatur von unter 5 K ist durch Kühlung mit flüssigem Helium realisierbar. Bei Temperaturen unter 5 K sind thermische Verbreiterungen der energetischen Zustände der Probe so gut wie nicht mehr vorhanden.

Insbesondere dann, wenn der Zustand der Probe bei sehr tiefen Temperaturen mit dem optischen Signal verändert werden soll, ist darauf zu achten, dass auch die Umgebung der Probe für diese tiefsten Temperaturen geeignet ist. Hierzu ist es häufig erforderlich, dass die Probe, während das optische Signal auf sie gerichtet wird, unter einer Schutzgasatmosphäre gehalten wird, die frei von Wasser und anderen bei tieferen Temperaturen auskondensierenden Substanzen ist. Daneben ist es natürlich auch wünschenswert, dass in der Schutzgasatmosphäre keine reaktiven Substanzen, wie beispielsweise Sauerstoff, enthalten sind, die ein Ausbleichen der Probe unter Einwirkung des optischen Signals beschleunigen.

In einer besonders bevorzugten Ausführung wird die Probe, während das optische Signal auf sie gerichtet wird, unter Vakuum gehalten, um optimale Bedingungen zu schaffen. Ein Vakuum bedeutet auch eine gute thermische Isolierung der Probe. Die Größe des Vakuums muss bei optischen Verfahren nicht dieselbe Größe erreichen wie beispielsweise in der Elektronenmikroskopie, wo jegliche Gase im Weg des Elektronenstrahls zu vermeiden sind.

Aufgrund der Formel sind besonders die Ausführungsformen des neuen Verfahrens von Interesse, bei denen die Wellenlänge des optischen Signals bezüglich dessen Wirkungsquerschnitts für das Überführen der Probe von dem ersten in den zweiten Zustand optimiert ist. Dies ist bei dem neuen Verfahren insbesondere auch dann möglich, wenn der erste Zustand ein angeregter energetischer Zustand der Probe ist, in den sie zuvor mit Hilfe eines weiteren optischen Signals gebracht wurde, wobei der zweite Zustand ein wieder abgeregter energetischer Zustand ist. Durch die bei tiefen Temperaturen schärfere Definition der energetischen Zustände der Probe - die Unterzustände sind schwächer besetzt - besteht eine deutlich verringerte Gefahr, dass die Probe mit dem optischen Signal nicht nur von dem ersten in den zweiten Zustand überführt wird, sondern dass auch eine unerwünschte erneute Überführung von Teilen der Probe mit dem optischen Signal in den angeregten ersten Zustand erfolgt.

Insbesondere ist das neue Verfahren in der Fluoreszenzmikroskopie anwendbar, wobei der angeregte Zustand ein fluoreszierender Zustand eines Fluoreszenzfarbstoffs in der Probe ist.

## KURZBESCHREIBUNG DER FIGUREN

Im Folgenden wird die Erfindung anhand der Figuren weiter erläutert und beschrieben.

Fig. 1 zeigt Auftragungen der räumlichen Intensitätsverteilung eines optischen Signals und der damit erreichten Übergangswahrscheinlichkeiten einer Probe von einem ersten Zustand in einen zweiten Zustand.

Fig. 2 zeigt ein Energiespektrum eines Fluoreszenzfarbstoffs mit Darstellungen der Besetzung von Unterzuständen seines Grundzustands bei Raumtemperatur und tiefer Temperatur; und

Fig. 3 zeigt die Wirkungsquerschnitte von zwei optischen Signalen in Bezug auf den Fluoreszenzfarbstoff gemäß Fig. 2 bei Raumtemperatur und tiefer Temperatur.

## FIGURENBESCHREIBUNG

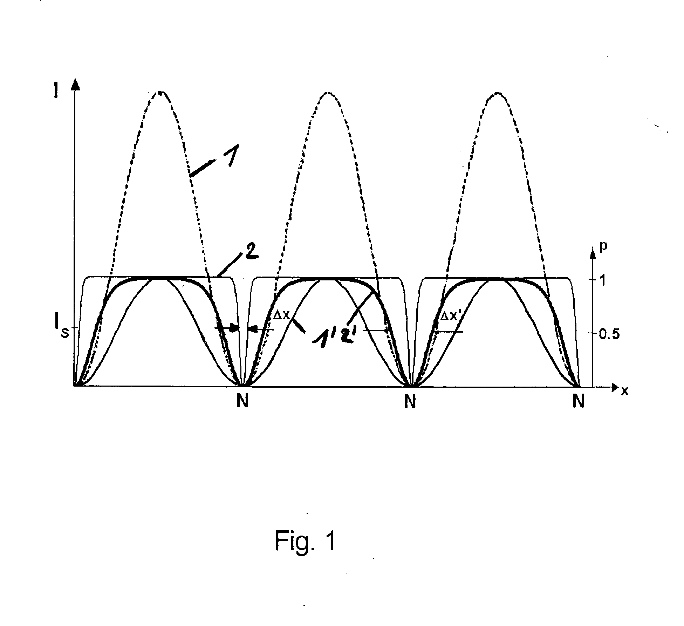

In **Fig. 1** ist die Intensität I über dem Ort x eines optischen Signals 1 aufgetragen. Die Verteilung der Intensität I ist sinusförmig und weist Nullstellen N auf. Ab einer Intensität $I(p=1)=3 \times I_s$, wobei $I_s$ die charakteristische Intensität ist, bei der die Probe durch die Einwirkung des abregenden optischen Signals statistisch gesehen zur Hälfte abgeregt ist, führt das optische Signal 1 bei einer Probe dazu, dass diese von einem ersten Zustand nahezu vollständig in einen zweiten Zustand überführt wird. Die vergleichsweise hohe absolute Intensität I des optischen Signals 1 führt dazu, dass eine Wahrscheinlichkeit p, dass sich die Probe in dem zweiten Zustand befindet, eine in Fig. 1 ebenfalls wiedergegebene Verteilung 2 aufweist, die überall außerhalb der Nullstellen N des optischen Signals 1 nahezu den Wert 1 annimmt. Mit anderen Worten wird mit dem optischen Signal 1 überall außerhalb seiner Nullstellen N eine Sättigung beim Überführen der Probe von ihrem ersten in ihren zweiten Zustand erreicht. Die Abmessungen $\Delta x$ der Bereiche der Probe um die Nullstellen N des optischen Signals 1, in denen sich die Probe noch in dem ersten Zustand befindet, sind mit $\Delta x \approx \lambda/(2n\sqrt{I/I_s})$ deutlich kleiner als die räumliche Auflösung, die bei einer üblichen optischen Anwendung aufgrund seiner Wellenlänge mit dem optischen Signal 1 zu erreichen wäre. Die Ortsauflösung der Bereiche der Probe, die sich um die Nullstellen N noch in dem ersten Zustand befinden, geht jedoch mit abnehmender Intensität I des optischen Signals 1 stark zurück, was anhand eines reduzierten optischen Signals 1' und einer entsprechenden Verteilung 2' sowie einer zugehörigen Abmessung $\Delta x'$, die in Fig. 1 ebenfalls aufgetragen sind, nachvollziehbar ist. Der erste Zustand der Probe kann ein Grundzustand der Probe sein, wie zum Beispiel der elektronische Grundzustand $S_0$ eines Farbstoffmoleküls, wobei die Probe durch das optische Signal 1 in den zweiten Zustand, z. B. einen fluoreszierenden Zustand $S_1$, energetisch angehoben wird.

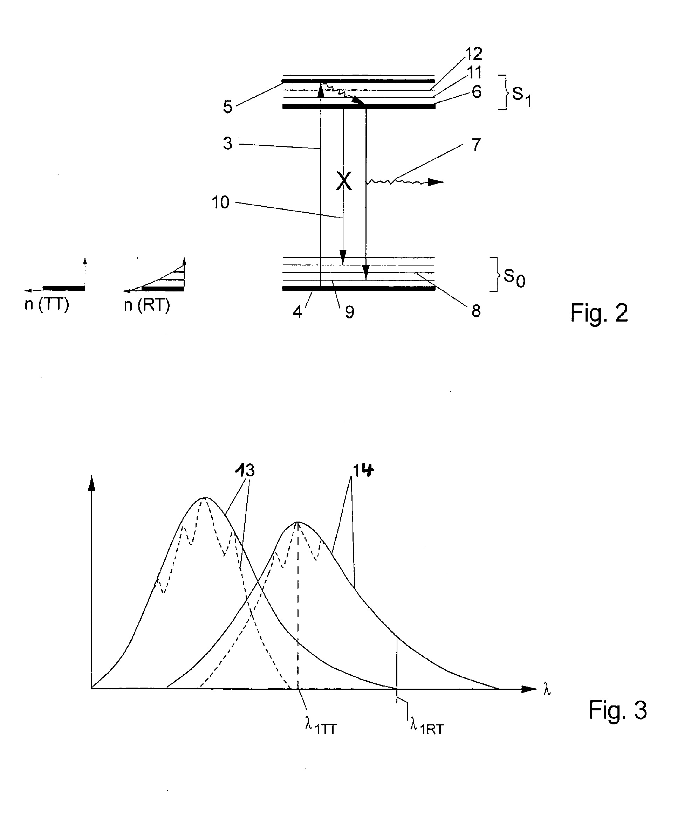

Ein anderer, besonderer Anwendungsfall des optischen Signals 1, das im Zusammenhang mit Fig. 1 näher erläutert wurde, liegt im Bereich der Fluoreszenzmikroskopie, bei der ein Fluoreszenzfarbstoff bis auf einen interessierenden Messpunkt aus seinem angeregten ersten Zustand mittels stimulierter Emission abgeregt wird. Fig. 2 deutet schematisch sowohl den ersten Zustand an, d.h. den elektronisch angeregten Zustand $S_1$, als auch den zweiten Zustand, der hier der elektronische Grundzustand $S_0$ ist, sowie ihre jeweilige Auffächerung in Vibrations-Unterzustände, die ihrerseits nochmals eine hier nicht skizzierte Feinstruktur aufweisen. Bevor das optische Signal 1 aufgebracht wird, wird die Probe zunächst mit einem weiteren optischen Signal 3 von einem Unterzustand 4, einem tiefen Vibrations-Unterzustand des Grundzustands $S_0$, in einen Unterzustand 5, einen Vibrations-Unterzustand des elektronisch angeregten Zustands $S_1$, überführt. Aus dem Un-

terzustand 5 gelangt der angeregte Fluoreszenzfarbstoff in den Unterzustand 6 oder bei endlicher Temperatur gemäß der Boltzmann-Statistik in einen thermisch angeregten, etwas höheren Unterzustand 11. Sowohl bei 6 als auch bei 11 handelt es sich um angeregte Zustände, aus denen sich der Fluoreszenzfarbstoff unter Emission von Fluoreszenzlicht 7 in den zweiten Zustand, also in den elektronischen Grundzustand $S_0$, spontan abregen kann. Die Abregung in den Unterzustand 8 des Grundzustands $S_0$ wird außerhalb des eigentlich interessierenden Messpunkts durch das optische Signal 1 gemäß Fig. 1 stimuliert, so dass sich der Fluoreszenzfarbstoff zum Zeitpunkt der anschließenden Messung nur noch innerhalb eines einer Nullstelle N des optischen Signals 1 entsprechenden Messpunkts in dem fluoreszierenden Unterzustand 6 oder 11 befindet. Während einer sich anschließenden Messung registriertes Fluoreszenzlicht kann also nur aus dem in seiner räumlichen Erstreckung reduzierten Messpunkt stammen. Die thermische Anregung des Fluoreszenzfarbstoffs, dessen Energiespektrum in Fig. 2 wiedergegeben ist, hat zur Folge, dass gemäß der Boltzmann-Verteilung mehrere Vibrations-Unterzustände, also höher gelegene Unterzustände des zweiten Zustands wie z. B. 8, 9, 10, sowie höher gelegene Vibrations-Unterzustände des ersten Zustands, beispielsweise 11, 12 und 5, besetzt sind. D.h. der Farbstoff weist, wenn er sich in einem dieser Zustände befindet, keine genau definierte Energie, sondern eine Energie innerhalb eines mit zunehmender Temperatur größer werdenden Intervalls auf. Dies ist in Fig. 1 dadurch angedeutet, dass die Besetzungen n der Unterzustände des Grundzustands $S_0$ bei Raumtemperatur RT und bei tiefer Temperatur TT schematisch wiedergegeben sind. Während bei Raumtemperatur auch mehrere Vibrations-Unterzustände eine relevante Besetzung aufweisen, ist bei tiefer Temperatur nur noch der Grundzustand selbst besetzt.

Aufgrund der durch die Bevölkerung von Unterzuständen bedingten Verbreiterung aller energetischen Zustände wächst mit zunehmender Temperatur die Wahrscheinlichkeit, dass die mit dem ersten optischen Signal bewirkte Abregung durch stimulierte Emission auch zu einer ungewollten Anregung des Fluoreszenzfarbstoffs aus dem Unterzustand 8 und/oder dem Unterzustand 9 heraus in den angeregten Unterzustand 6 oder 11 führt. Andererseits kann bereits die Anregung des Fluoreszenzfarbstoffs mit dem zweiten optischen Signal 3 auch zu durch ungewollte stimulierte Emission aus dem Unterzustand 5, 11 oder 12 zurück in den Unterzustand 4 führen und so das Fluoreszenzsignal reduzieren, das aus den engen räumlichen Bereichen der Probe stammt, die gemessen werden sollen. Die den beiden optischen Signalen zugedachten Aufgaben, aus dem ersten Zustand ab-, bzw. in den ersten Zustand anzuregen, können diese somit nicht mit der gewünschten Eindeutigkeit ausführen.

Darüber hinaus wächst mit zunehmender Temperatur die Wahrscheinlichkeit, dass der Farbstoff aus dem Unterzustand 6 gemäß Fig. 2 nicht unter Aussendung von Fluoreszenzlicht 7 in den Grundzustand $S_0$ gelangt, sondern aufgrund eines Stoßvorgangs 10. Je stärker dieser Vorgang 10 mit der spontanen Fluoreszenz aus dem Unterzustand 6 heraus konkurriert, desto geringer ist dessen Lebensdauer. Je geringer die Lebensdauer des Unterzustands 6 ist, desto größer müssen die Intensitäten sein, mit denen dieser fluoreszierende Unterzustand - außer in den Nullstellen N der räumlichen Verteilung des optischen Signals 1 gemäß Fig. 1 - während der Lebensdauer des ersten Zustands beseitigt wird, um die Probe aufgrund ihrer spontanen Fluoreszenz aus dem ersten Zustand ausschließlich in den Nullstellen N gemäß Fig. 1 messen zu können. Wenn umgekehrt die Lebensdauer des fluoreszierenden Unterzustands 6 durch Absenken der Temperatur erhöht wird, kann die Intensität des optischen Signals 1 reduziert werden, oder die Ortsauflösung kann gemäß $\Delta x \approx \lambda/(2n\sqrt{I\sigma\tau})$ erhöht werden. Das in diesem Abschnitt für den Unterzustand 6 Gesagte gilt auch für den höher gelegenen Unterzustand 11.

Fig. 3 skizziert, warum auch ein Nichtbesetzen der höheren Unterzustände gemäß Fig. 2 zu der Möglichkeit führt, die Intensität des optischen Signals 1 zu reduzieren, die für eine Sättigung beim Überführen der Probe von ihrem ersten Unterzustand 6 in ihren zweiten Unterzustand 8 außerhalb der Bereiche der Nullstellen N erforderlich ist, bzw. den Wirkungsquerschnitt σ und damit die Ortsauflösung zu erhöhen. In Fig. 3 ist das Absorptionsspektrum 13 bzw. das Emissionsspektrum 14 eines typischen Farbstoffes über die Wellenlänge λ für das optische Signal 1 und für das weitere optische Signal 3 aufgetragen. Dabei geben die durchgezogenen Linien den Verlauf der Spektren über der Wellenlänge λ bei Raumtemperatur und die gestrichelten Linien den Verlauf bei einer Temperatur unterhalb 80 K qualitativ wieder. Jeder des zunächst breiteren Peaks zieht sich in Richtung der λ-Achse zusammen, und dabei werden einzelne Teilpeaks sichtbar, die weitgehend Vibrations-Unterzuständen zuzuordnen sind. Insbesondere geht aber die weitreichende mittige Überlappung der beiden Spektren auf der λ-Achse zurück. Das Emissionsspektrum ist ein Maß für den Wirkungsquerschnitt σ für die stimulierte Emission. Wenn bei Raumtemperatur das optische Signal 1 mit einer Wellenlänge $\lambda_{1RT}$ zur Abregung durch stimulierte Emission eingesetzt werden muss, um nicht zugleich zu einer ungewollten Anregung zu führen, die jeweils nur einen relativ schlechten Wirkungsquerschnitt in Bezug auf die eigentlich gewünschte Zustandsänderung aufweist, kann bei tiefer Temperatur für das abregende optische Signal 1 die Wellenlänge $\lambda_{1TT}$ gewählt werden, die einen optimalen, d.h. maximalen Wirkungsquerschnitt aufweist und die typischerweise um mehr als 10 nm kürzer ist als $\lambda_{1RT}$. Das führt direkt zu einer höheren Auflösung $\Delta x$ oder es ist alternativ möglich, die Intensität des abregenden optischen Signals 1, mit dem die Probe außerhalb seiner Nullstellen zu gesättigt abzuregen ist, herabzusetzen.

Gleichzeitig begrenzt die Abkühlung der Probe die Mobilität von Radikalen, die durch das in hoher Intensität einfallende optische Signal 1 gebildet werden und die aufgrund chemischer Veränderungen der enthaltenen Farbstoffe mit der Zeit zu einem Ausbleichen der Probe führen. Damit kann die Intensität I des optischen Signals zur Steigerung der Ortsauflösung erhöht werden. Aus dem Zusammenspiel der verschiedenen auf der Temperaturherabsenkung basierenden Effekte resultiert bei dem neuen Verfahren ein ganz erhebliches Potential für die Erhöhung der Ortsauflösung, ohne die in der Probe enthaltenen Farbstoffe auszubleichen. Dieses Potential kann insbesondere in der Fluoreszenzmikroskopie genutzt werden.

**BEZUGSZEICHENLISTE**

1   Optisches Signal
2   Verteilung
3   Weiteres optisches Signal
4   Unterzustand
5   Unterzustand
6   Unterzustand
7   Fluoreszenzlicht
8   Unterzustand
9   Unterzustand
10  Unterzustand
11  Unterzustand
12  Unterzustand
13  Absorptionsspektrum
14  Emissionsspektrum

I   Intensität
p   Wahrscheinlichkeit
N   Nullstelle
n   Besetzung

**Patentansprüche**

1. Verfahren zum Überführen einer Probe von einem ersten Zustand in einen zweiten Zustand mit einem optischen Signal, wobei das optische Signal eine räumliche Intensitätsverteilung mit mindestens einer Nullstelle und mit an die Nullstelle angrenzenden Bereichen aufweist, in denen die Intensität des Signals so groß ist, dass eine Sättigung beim Überführen der Probe in den zweiten Zustand erreicht wird, **dadurch gekennzeichnet, dass** die Probe, bevor das optische Signal auf sie gerichtet wird, auf unter 5 °C abgekühlt wird.

2. Verfahren nach Anspruch 1, **dadurch gekennzeichnet, dass** die Probe, bevor das optische Signal auf sie gerichtet wird, auf mindestens 0 °C abgekühlt wird.

3. Verfahren nach Anspruch 1, **dadurch gekennzeichnet, dass** die Probe, bevor das optische Signal auf sie gerichtet wird, auf unter 150 K abgekühlt wird.

4. Verfahren nach Anspruch 1, **dadurch gekennzeichnet, dass** die Probe, bevor das optische Signal auf sie gerichtet wird, auf unter 80 K abgekühlt wird.

5. Verfahren nach Anspruch 1, **dadurch gekennzeichnet, dass** die Probe, bevor das optische Signal auf sie gerichtet wird, auf unter 5 K abgekühlt wird.

6. Verfahren nach einem der Ansprüche 1 bis 5, **dadurch gekennzeichnet, dass** die Probe, während das optische Signal auf sie gerichtet wird, unter einer Schutzgasatmosphäre und/oder unter Vakuum gehalten wird.

7. Verfahren nach einem der Ansprüche 1 bis 6, **dadurch gekennzeichnet, dass** eine Wellenlänge des optischen Signals bezüglich dessen Wirkungsquerschnitts für das Überführen der Probe von dem ersten in den zweiten Zustand optimiert ist.

8. Verfahren nach einem der Ansprüche 1 bis 7, **dadurch gekennzeichnet, dass** der erste Zustand ein angeregter energetischer Zustand der Probe ist, in den sie zuvor mit Hilfe eines weiteren optischen Signals gebracht wurde, und dass der zweite Zustand ein abgeregter energetischer Zustand ist.

9. Verfahren nach Anspruch 8, **dadurch gekennzeichnet, dass** der angeregte Zustand ein fluoreszierender Zustand eines Fluoreszenzfarbstoffs ist.

10. Fluoreszenzmikroskopisches Verfahren nach einem der vorangehenden Ansprüche 1 bis 9, **dadurch gekennzeichnet, dass** die abgekühlte Probe zunächst mit einem Anregungslichtstrahl als weiterem optischen Signal in einem von einer Detektoreinrichtung erfassten Bereich aus einem Grundzustand in einen fluoreszierenden Zustand gebracht wird und dass dann mit einem abregenden Lichtstrahl als optischem Signal die Probe in dem Bereich bis auf einem Messpunkt, der einer Nullstelle einer Intensitätsverteilung des abregenden Lichtstrahls entspricht, zur stimulierten Emission angeregt wird, um sie wieder in ihren Grundzustand zu bringen, so dass die Detektoreinrichtung anschließend nur spontan emittiertes Fluoreszenzlicht aus dem Messpunkt erfasst, wobei die Abmessungen des Messpunkts durch Maximierung der Intensität des abregenden Lichtstrahls und seines Wirkungsquerschnitts für die stimulierte Emission minimiert werden.

Fig. 1

Fig. 2

Fig. 3

## EP 1 582 858 A1

**Europäisches Patentamt**

**EUROPÄISCHER RECHERCHENBERICHT**

Nummer der Anmeldung

EP 04 00 7533

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | DYBA M ET AL: "FOCAL SPOTS OF SIZE LAMBDA/23 OPEN UP FAR-FIELD FLUORESCENCE MICROSCOPE AT 33 NM AXIAL RESOLUTION" PHYSICAL REVIEW LETTERS, NEW YORK,NY, US, Bd. 88, Nr. 16, 22. April 2002 (2002-04-22), Seiten 163901-1-163901-4, XP001097237 ISSN: 0031-9007 * das ganze Dokument * --- | 1-10 | G01N21/64 G02B21/00 |
| Y | JASNY J ET AL: "Fluorescence microscopy in superfluid helium: single molecule imaging" REVIEW OF SCIENTIFIC INSTRUMENTS, APRIL 1996, AIP, USA, Bd. 67, Nr. 4, Seiten 1425-1430, XP002291592 ISSN: 0034-6748 * Absätze [00I.]-[III.] * --- | 1-10 | |
| Y | SEGURA J M ET AL: "A SAMPLE-SCANNING CONFOCAL OPTICAL MICROSCOPE FOR CRYOGENIC OPERATION" REVIEW OF SCIENTIFIC INSTRUMENTS, AMERICAN INSTITUTE OF PHYSICS. NEW YORK, US, Bd. 71, Nr. 4, April 2000 (2000-04), Seiten 1706-1711, XP001063829 ISSN: 0034-6748 * Absätze [00I.],[III.] * --- | 1-10 | **RECHERCHIERTE SACHGEBIETE (Int.Cl.7)** G01N G02B |

-/--

Der vorliegende Recherchenbericht wurde für alle Patentansprüche erstellt

| Recherchenort | Abschlußdatum der Recherche | Prüfer |
|---|---|---|
| MÜNCHEN | 6. August 2004 | Consalvo, D |

EPO FORM 1503 03.82 (P04C03)

**Europäisches Patentamt**

# EUROPÄISCHER RECHERCHENBERICHT

Nummer der Anmeldung

EP 04 00 7533

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | VACHA M ET AL: "LASER SCANNING MICROSCOPE FOR LOW TEMPERATURE SINGLE MOLECULE AND MICROSCALE SPECTROSCOPY BASED ON GRADIENT INDEX OPTICS" REVIEW OF SCIENTIFIC INSTRUMENTS, AMERICAN INSTITUTE OF PHYSICS. NEW YORK, US, Bd. 70, Nr. 4, April 1999 (1999-04), Seiten 2041-2045, XP000875397 ISSN: 0034-6748 * Absätze [00I.],[III.] * --- | 1-10 | |
| D,Y | DE 101 54 699 A (MAX PLANCK GESELLSCHAFT) 28. Mai 2003 (2003-05-28) * das ganze Dokument * ----- | 1-10 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| MÜNCHEN | 6. August 2004 | Consalvo, D |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 04 00 7533

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-08-2004

| Im Recherchenbericht angeführtes Patentdokument | Datum der Veröffentlichung | Mitglied(er) der Patentfamilie | Datum der Veröffentlichung |
|---|---|---|---|
| DE 10154699        A | 28-05-2003 | DE    10154699  A1<br>WO    03040706  A1 | 28-05-2003<br>15-05-2003 |

EPO FORM P0461

Für nähere Einzelheiten zu diesem Anhang : siehe Amtsblatt des Europäischen Patentamts, Nr.12/82